# FASCICULE DE BREVET EUROPEEN

(11) **EP 0 490 794 B1**
(45) Date de publication et mention de la délivrance du brevet: **14.12.1994**
(21) Numéro de dépôt: 91420441.7
(22) Date de dépôt: 10.12.1991
(51) Int. Cl.: A23L 1/227, A23L 1/237

(54) **Compositions utiles en tant que matières premières pour la préparation d'arômes salés et/ou grillés et/ou torréfiés notamment par des réactions de Maillard**
Rohstoffenzusammenstellungen die nützlich sind zur Herstellung von Salz- und/oder Brat- und/oder Rostaromen, insbesondere durch der Maillard Reaktion
Compositions useful as raw materials for preparing salted and/or grilled and/or roasted flavours, particularly by Maillard reactions

(30) Priorité: 10.12.1990 FR 9015736
(43) Date de publication de la demande: 17.06.1992
(73) Titulaire: ORSAN, 75009 Paris (FR)
(72) Inventeur: Du Crest, Catherine, F-92190 Meudon (FR); Majou, Didier, F-92200 Neuilly-sur-Seine (FR)
(74) Mandataire: Tilloy, Anne-Marie

(56) Documents cités:
- FR-A- 1 323 359
- FR-A- 2 210 359
- FR-A- 2 547 992
- FR-A- 2 574 790
- FOOD MANUFACTURE, vol. 64, no. 11, novembre 1989, pages 61,63,64, Woolwich, GB;"The maillard reaction"
- P.Z. MARGALITH: "Flavor microbiology", 1981, pages 262-268, C.C. Thomas,Springfield, IL, US
- T.H. PARLIMENT et al.: "Biogeneration of aromas", 1986, pages 318,319,333,334,335, American Chemical Society, Washington, DC, US

## Description

La présente invention concerne des compositions utiles en tant que matières premières pour la fabrication d'arômes salés et/ou grillés et/ou torréfiés, notamment par des réactions de Maillard, ainsi que des compositions aromatisantes élaborées, destinées à l'alimentation humaine et animale incorporant les arômes salés et/ou grillés obtenus.

Par arômes salés et/ou grillés et/ou torréfiés, on entend des matières présentant des notes aromatiques salées du type viande, poisson, crustacés, fumées, etc ... et/ou des notes aromatiques grillées ou torréfiées du type café, cacao, etc ... Les arômes salés et/ou grillés et/ou torréfiés, que l'on perçoit aussi bien grâce à l'odorat qu'au goût, ne doivent pas être confondus avec les assaisonnements additionnés aux aliments pour leur conférer une saveur particulière détectable seulement par le sens du goût. Selon le cas, le goût détecté est salé, amer, acide, sucré ou UMAMI. Le goût UMAMI est voisin du goût de pot au feu ou de bouillon de viande. Les agents de sapidité à l'origine du goût UMAMI sont notamment l'acide glutamique et ses sels. Des procédés de préparation d'agents de sapidité ayant la saveur UMAMI sont notamment décrits dans les brevets français FR-A-1.328.359, FR-A-2.574.790 et FR-A-2.547.992.

Il est bien connu que les arômes alimentaires résultent de la contribution de mélanges de très nombreuses substances. Ces arômes sont notamment décrits dans l'ouvrage intitulé "FOOD FLAVOURS" de I.D. MORTON et A.J. MACLEOD, pages 236 et suivantes, pages 306 et suivantes, pages 399 et suivantes, édition Elsevier Scientific Publishing Company, 1982 et dans l'ouvrage intitulé "DEVELOPMENTS IN FOOD FLAVOURS" de G.G. BIRCH et M.G. LINDLEY, partie 12, Page 191, dans l'article "The scientific and technological basis of Meat Flavours", Edition Elsevier Applied Science, 1986.

Ainsi, l'arôme "viande" est la résultante d'une synergie entre des substances sapides et des substances plus volatiles responsables de la perception olfactive première, dite "bouquet". Parmi les composants non volatils de l'arôme viande, on trouve :
- l'acide glutamique et ses sels,
- des nucléotides tels que l'inosine-5'-monophosphate et la guanosine-5' monophosphate,
- certains peptides,
- certains acides aminés,
- des lipides et leurs produits de dégradation,
- des sels minéraux, etc ...

Ces composants agissent non seulement en tant que tels, mais également comme précurseurs de molécules aromatiques puissantes.

A titre d'exemple, parmi les substances volatiles responsables de l'arôme "boeuf cuit", on a identifié, dans l'article "The Scientific and Technological basis of Meat Flavours" extrait de l'ouvrage intitulé "Development in Food Flavours" (Chapitre 12, pages 191 et suivantes, édition Elsevier 1986), 748 composés différents appartenant aux différentes classes chimiques suivantes :

| **CLASSES** | | **NOMBRES** |
|---|---|---|
| Hydrocarbones : | - aliphatiques | 73 |
| | - alicycliques | 4 |
| Terpenoides | | 8 |
| Alcools : | - aliphatiques | 46 |
| | - alicycliques | 1 |
| Aldehydes : | - aliphatiques | 55 |
| Cétones : | - aliphatiques | 44 |
| | - alicycliques | 8 |
| Acides carboxyliques : | - aliphatiques | 20 |
| Lactones | | 32 |
| Esters : | - aliphatiques | 27 |
| Ethers : | - aliphatiques | 5 |
| Amines : | - aliphatiques | 20 |

| **CLASSES** | **NOMBRES** |
|---|---|
| Composés chlorés | 10 |
| Composés benzéniques | 86 |
| Composés de soufre (non hétérocyclique) | 68 |
| Furanes et ses dérivés | 43 |
| Thiophènes et ses dérivés | 40 |
| Pyrroles et ses dérivés | 20 |
| Pyridines et ses dérivés | 17 |
| Pyrazines et ses dérivés | 54 |
| Oxazol(in)es etc. | 13 |
| Thiazol(in)es | 29 |
| Autres soufres hétérocycliques | 13 |
| Divers | 12 |

Classiquement, on assimile les composés aromatiques à des produits de Maillard. En fait, bien que les produits de Maillard contribuent fortement aux notes aromatiques, d'autres composés, issus d'autres réactions, tiennent un rôle important dans la perception des arômes et, en leur absence, certaines notes aromatiques essentielles de ces arômes ne seraient pas présentes. En effet, certaines réactions comme :
- la dégradation ou l'oxydation thermiques des lipides,
- la dégradation thermique de la thiamine
- la réaction du 4-hydroxy-5-méthyle-3(2H)furanone avec le sulfure d'hydrogène,
donnent naissance à des composés aromatiques volatils importants dans la constitution de l'arôme salé et/ou grillé et/ou torréfiés, par exemple, à des composés décrits comme possédant une odeur de viande.

Ainsi, dans le cas particulier des arômes de viande, peu de composés sont issus des réactions de Maillard. Entrant dans cette dernière catégorie, on trouve les composés aromatiques volatils suivants :
- les pyrazines auxquels correspondent des arômes de type rôti, noix, café et/ou chocolat,
- des pyrroles auxquels correspondent des arômes "café" et/ou "chocolat",
- des pyrrolidines auxquels correspondent des arômes "pain grillé",
- des pyridines auxquels correspondent des arômes "café",
- des thiazoles auxquels correspondent des arômes "noix" et/ou "chocolat".

D'une manière générale, les réactions de Maillard se font entre des glucides réducteurs et des acides aminés sous l'action d'un traitement thermique. Ce sont des réactions de brunissement non enzymatiques qui aboutissent dans un stade ultime à la formation de pigments bruns : les mélanoïdines.

A ce jour, les réactions de Maillard sont en partie définies mais difficilement contrôlables : les mécanismes d'apparition des substances aromatiques restent complexes et sont encore mal connus car ils sont influencés d'une part par les matières premières choisies, et d'autre part par les conditions opératoires employées, et en particulier la température, le temps, le pH, la concentration des matières premières et la teneur en eau dans le milieu réactionnel. De plus, ces réactions ont davantage été étudiées avec des systèmes modèles contenant des produits purs et donc assez éloignés des mélanges complexes que constituent les denrées habituellement utilisées. Comme indiqué précédemment, les notes aromatiques obtenues par les réactions de Maillard sont extrêmement variées et infiniment variables. Selon les conditions opératoires et les matières premières choisies, les notes aromatiques peuvent être agréables ou désagréables et leur puissance aromatique est plus ou moins forte. Par exemple, à température ambiante, les réactions de Maillard peuvent provoquer l'apparition d'arômes non désirables dans certaines denrées.

Ainsi, dans le cas particulier de la préparation de l'arôme "viande", s'il est vrai que des produits des réactions de Maillard entre certains acides aminés et certains sucres réducteurs, contribuent intensément aux notes aromatiques constituant l'arôme "viande", on observe que les précurseurs des notes aromatiques développées au cours de ces réactions peuvent aboutir à des arômes indésirables ou totalement différents de ceux recherchés.

A partir de systèmes modélisés d'acide aminé pur et de sucre, on a montré l'importance des acides aminés dans le développement des arômes. Selon l'article intitulé "The Maillard Reaction", extrait de "FOOD MANUFACTURE", vol. 64, n° 11, paru en Novembre 1989, pages 61, 63, 64, la cystéine apporterait un arôme "viande", la méthionine apporterait des notes aromatiques végétales et l'(hydroxy)proline conduirait à des arômes de pain.

En partant d'autres conditions opératoires, dans l'article intitulé "Aromas Generated by Reaction of Amino Acids with different sugars" extrait de l'ouvrage de EL.ODE et al (1966), on aboutit à d'autres arômes : les arômes générés par des réactions de Maillard entre des acides aminés purs et différents sucres sont reportés dans le tableau qui suit.

| | Glucose | Fructose | Maltose | Sucrose |
|---|---|---|---|---|
| Glycine | Sucre brûlé | Bouillon de boeuf | Bouillon de boeuf | Bouillon de boeuf |
| Acide glutamique | Blanc de volaille | Poulet | Jambon cuit | Viande brûlée |
| Lysine | Pommes de terre frites brûlées | Pommes de terre frites | Vieille pomme de terre | Viande bouillie |
| Methionine | Chou | Soupe de haricot | Raifort (radis noir) | Chou trop cuit |
| Phenylalanine | Caramel | "Chien sale" | Caramel doux | Chocolat |

Comme le tableau précédent, le tableau suivant, issu de HODGE (1967), montre la diversité des arômes développés par des mélanges équimolaires d'acide aminé pur et de glucose soumis à des réactions de Maillard qui, selon le cas, conduisent à des arômes agréables, désagréables ou encore à l'absence d'arôme.

Ainsi, ces modèles n'ont pas de valeur prédictible : l'assemblage de diverses notes, obtenues à partir de divers acides aminés et sucres, ne permet pas d'accéder à des arômes valables par traitement de mélanges simples.

| **Acides Aminés** | **Aldéhyde Forme** | **Arôme Note pour une réaction** | |
|---|---|---|---|
| | | à 100°C | à 180°C |
| Glycine | Formaldéhyde | Caramel | Sucre brûlé |
| Alanine | Acétaldéhyde | Caramel | Sucre brûlé |
| Aminobutyrate | Propionaldéhyde | Caramel, Sirop d'érable, | Sucre brûlé |
| Valine | Isobutyraldéhyde | Pain de seigle, fruité | Chocolat (fort) |
| Leucine | Isovaleraldéhyde | Sucre, Chocolat, Pain grillé | Fromage brûlé |
| Isoleucine | Méthyl-2 butyraldéhyde | Moisi, fruité | Fromage brûlé |
| Sérine | Glycolaldéhyde | | |
| Thréonine | Lactaldéhyde | Chocolat | Brûlé |
| Méthionine | Méthional | Pomme de terre | |
| Phénylalanine | Toluenaldéhyde | Violette, Rose | Violette, Lilas |
| Proline | | Protéine brûlée | Arôme de pain |
| Hydroxyproline | | Pomme de terre | |
| Histidine | | Rien | Pain blanc, beurre |
| Arginine | | Note de beurre | Sucre brûlé |
| Lysine | | Rien | Pain |
| Acide aspartique | | Sucre candi | Caramel |
| Acide glutamique | | Caramel | Sucre brûlé |
| Glutamine | | Chocolat | Caramel au beurre |
| Cystéine | | Sulfure, viande | |
| Cystine | | Sulfure, Peau de dinde grillée | |

Pour préparer des compositions aromatisantes, il est donc indispensable de parfaitement contrôler les conditions opératoires et de sélectionner les matières premières appropriées : ces choix sont particulièrement difficiles en raison des aléas et de la complexité des réactions.

Il est connu d'utiliser des réactions de Maillard pour préparer des arômes salés et/ou grillés et/ou torréfiés. Une matière première, riche en précurseurs d'arômes, pour la préparation d'arômes destinés à l'industrie alimentaire, doit pouvoir générer un large spectre de différentes nuances aromatiques permettant de reconstituer les arômes agréables recherchés. En outre, cette matière première doit être exempte de toute substance toxique.

Usuellement, les matières premières pour la préparation d'arômes salés et/ou grillés et/ou torréfiés sont à base d'extraits et/ou d'autolysats de levures ou d'hydrolysats de protéines d'origine animale ou végétale.

Le procédé de préparation des extraits de levures consiste dans une première étape à détruire les levures, par exemple par traitement thermique, à extraire le contenu cellulaire de ces levures qui est riche en protéines et en acides aminés. Les extraits de levures obtenus sont à la fois coûteux et de qualité irrégulière. En outre, les arômes réalisés avec ces extraits de levures par des réactions de Maillard possèdent des spectres de notes aromatiques peu diversifiées et peu intenses.

Le procédé de préparation des autolysats de levures consiste à détruire la membrane des levures et à concentrer le produit obtenu. On retrouve chez les autolysats de levures les inconvénients des extraits de levures. De plus, les autolysats de levures possèdent une certaine amertume due à la présence de petits peptides, gênante pour la fabrication d'arômes.

Un autre inconvénient important, que l'on trouve à la fois dans les extraits et les autolysats de levures, réside dans le fait qu'ils peuvent contenir une teneur en chlorure de sodium (NaCl) élevée. La rupture de la membrane de ces levures est en effet généralement obtenue par osmolyse dans un milieu riche en NaCl. Il en résulte une note salée prépondérante et intense qui gêne l'appréciation des autres notes aromatiques qui sont obtenues à partir de ces précurseurs d'arômes, par exemple grâce à des réactions de Maillard. Pour pallier cet inconvénient, on doit éliminer ce sel de cette matière première. En raison de la grande solubilité de ce sel, son élimination est assez complexe. En conséquence, les extraits et les autolysats de levures en tant que précurseurs d'arômes sont des produits chers.

Le procédé de préparation des hydrolysats de protéines consiste à soumettre des protéines d'origine végétale ou animale à une hydrolyse par voie chimique ou enzymatique. Ces hydrolysats de protéines possèdent aussi une certaine amertume due à la présence de petits peptides, gênante pour la fabrication d'arômes.

Le procédé de préparation par voie chimique peut avoir pour inconvénient de produire également des résidus toxiques, et en particulier des résidus susceptibles d'être cancérigènes. Par ailleurs, quand on utilise les hydrolysats de protéines pour préparer des arômes, les notes aromatiques obtenues sont peu diversifiées : mais, pour partie, elles sont complémentaires des notes aromatiques obtenues à partir des extraits et/ou autolysats de levures. Pour pallier partiellement cet inconvénient, on utilise comme précurseur d'arômes un mélange d'hydrolysats de protéines et d'extraits de levure (et/ou d'autolysats de levures).

Un but de la présente invention est de proposer de nouvelles compositions utiles en tant que matières premières pour la fabrication d'arômes salés et/ou grillés et/ou torréfiés, notamment par des réactions de Maillard.

Un autre but de l'invention est une matière première possédant un potentiel de spectres de notes aromatiques salées et/ou grillées et/ou torréfiées diversifiées et intenses.

Un autre but de l'invention est de réaliser une matière première riche en précurseurs d'arômes exempts de substances toxiques telles que le dichloropropanol et le monochloropropanol.

Conformément à l'invention, pour atteindre ces buts, on a trouvé des compositions utiles comme matières premières pour la fabrication d'arômes salés et/ou grillés, notamment par des réactions de Maillard, caractérisées en ce que lesdites compositions consistent en un moût fermenté et traité, obtenu à partir d'un ou de plusieurs micro-organismes producteurs d'acides aminés, résultant de la fermentation de sources de carbone d'origine végétale, le moût fermenté obtenu étant ensuite traité pour en éliminer les micro-organismes et les produits indésirables en alimentation humaine et animale.

Dans la suite de la description, on désignera par précurseur d'arômes le moût de fermentation débactérié, dont on a éventuellement éliminé, au moins partiellement, certains composés minéraux et/ou organiques.

Par sources de carbone d'origine végétale, on entend les carbohydrates d'origine végétale susceptibles d'être transformés par fermentation, notamment en protéines, acides aminés et en d'autres composés utiles en aromatisation, en tant que précurseurs pour l'obtention d'arômes par des réactions de Maillard ou d'autres réactions. Comme sources de carbone d'origine végétale, on utilise de préférence l'amidon et ses hydrolysats, des sucres, par exemple le glucose, le saccharose, des mélasses, etc...

Conformément à l'invention, le moût de fermentation utilisé pour préparer les précurseurs d'arômes est un moût fermenté obtenu à partir d'un ou de plusieurs micro-organismes producteurs d'acides aminés tels que l'acide glutamique, la lysine, la phénylalanine, l'ornithine, la valine, la leucine, le tryptophane, l'isoleucine et la thréonine.

Pour certains des moûts précités, il conviendra d'éliminer certains produits de la fermentation, au moins partiellement, pour aboutir à l'arôme salé et/ou grillé et/ou torréfié recherché. Egalement, il sera parfois nécessaire de soustraire les produits indésirables en alimentation humaine et animale présents dans les moûts de fermentation.

Le ou les composés minéraux ou organiques qui peuvent être soustraits partiellement ou totalement du moût fermenté débactérié sont par exemple certains sels minéraux, certains acides aminés libres, etc ...

Ces soustractions sont réalisées par divers procédés physico-chimiques tels que l'électrodialyse ou l'ultrafiltration ou la séparation par chromatographie sur résines échangeuses d'ions, ces résines devant être admises pour l'utilisation dans les industries alimentaires.

Par le terme fermentation, on entend la consommation partielle ou totale des sources de carbone.

La concentration des précurseurs d'arômes selon l'invention est plus ou moins poussée selon que l'on souhaite obtenir des précurseurs d'arômes liquides, pâteux ou solides.

Eventuellement, on soumet les compositions selon l'invention à un séchage pour obtenir des précurseurs d'arômes pulvérulents.

Eventuellement encore, on décolore les compositions selon l'invention, par exemple à l'aide de charbon actif ou par chromatographie sur résine ou par électrodialyse.

L'une des caractéristiques principales de l'invention réside dans le fait que les matières premières utilisées pour préparer les précurseurs d'arômes selon l'invention sont les produits obtenus par l'action d'un micro-organisme producteur d'acides aminés sur une source de carbone d'origine végétale.

De ce fait, les compositions selon l'invention sont avantageusement riches en acides aminés.

Par ailleurs, elles présentent un pouvoir colorant et des nuances colorées intéressants pour les articles alimentaires auxquels elles sont incorporées.

Egalement, les compositions selon l'invention constitue un substrat régulier et contrôlable car on n'a pas recours à des hydrolyses ou à des traitements enzymatiques incontrôlables pour les préparer.

Les précurseurs d'arômes selon l'invention possèdent un potentiel de notes aromatiques salées et/ou grillées et/ou torréfiées, variées et agréables, correspondant à un spectre aromatique suffisamment large pour envisager sa substitution à des mélanges d'extraits et/ou d'autolysats de levures et d'hydrolysats de protéines.

L'un des avantages majeurs des compositions selon l'invention réside, en effet, dans le fait que les compositions selon l'invention sont capables, sans ajout important de composés complémentaires, par des réactions de Maillard et d'autres processus bien connus, propres à la préparation d'arômes, de reproduire le spectre quasiment complet des notes aromatiques composant les arômes salés et/ou grillés et/ou torréfiés. Car, outre des acides aminés qui contribuent fortement à la formation des notes aromatiques recherchées, les compositions selon l'invention contiennent des composés d'une importance majeure pour la reconstitution d'un arôme. En particulier, les compositions selon l'invention comprennent avantageusement des substances non volatiles et volatiles nécessaires pour donner les nuances sucrées, salées, acides, amères et UMAMI des arômes salés et/ou grillés et/ou torréfiés.

Dans le cas particulier de la fabrication d'acide glutamique par fermentation, les compositions conformes à l'invention qui en sont issues, comprennent avantageusement les composés suivants identifiés dans la viande :
- des composés utiles pour l'obtention de la saveur sucrée tels que des sucres et certains acides aminés,
- des composés utiles pour l'obtention de la saveur salée tels que des sels minéraux et les glutamates,
- des composés utiles pour l'obtention des saveurs acides tels que des acides carboxyliques dont l'acide lactique et l'acide pyrrolydone carboxylique,
- des composés utiles pour l'obtention des saveurs amères tels que certains acides aminés,
- des composés utiles pour l'obtention de la saveur UMAMI tels que le glutamate de sodium, l'inosine-5' monophosphate et la guanosine-5' monophosphate.

Un autre avantage du moût de fermentation glutamique peut provenir de l'acide glutamique et de ses sels ainsi que de l'acide pyrrolydone carboxylique qui ont l'aptitude de masquer les arômes ou les nuances indésirables comme l'amertume ou les odeurs indésirables des produits soufrés issus de la dégradation des acides aminés soufrés.

En outre, bien que les compositions selon l'invention comprennent des quantités moins importantes d'acides aminés que les extraits et/ou autolysats de levures et les hydrolysats de protéines, elles développent des arômes d'intensité aussi importante que les précurseurs d'arômes connus. Ainsi, les compositions selon l'invention provenant de la fabrication d' acide glutamique ne comprennent généralement pas plus de 40 % en poids d'acides aminés (rapporté au poids total des matières sèches) et généralement de l'ordre de 30 % en poids, voire seulement 15 % en poids environ, d'acides aminés quand l'acide glutamique produit est extrait.

Par contre, les proportions d'acides aminés présents dans les précurseurs connus sont nettement supérieures, à savoir souvent de l'ordre de 69 % pondéral dans les hydrolysats de protéines végétales et souvent de l'ordre de 50 % pondéral pour les extraits de levure.

Toutes ces compositions ont donné de manière surprenante des arômes très satisfaisants sur le plan organoleptique. En effet, ces compositions restent extrêmement performantes quand elles sont soumises à des processus connus propres à la formulation d'arômes tels que des réactions de Maillard et aboutissent à la reproduction d'arômes salés et/ou grillés et/ou torréfiés avec toutes les nuances subtiles qui font la richesse de ces arômes quand ils sont obtenus naturellement.

Les précurseurs d'arômes selon l'invention présentent également l'avantage de pouvoir être obtenus par des procédés ne nécessitant pas de chlorure de sodium. Et quand ils en contiennent, c'est toujours dans des proportions acceptables, donc sans risque de gêner la richesse des notes aromatiques qu'ils comprennent potentiellement.

En outre, les précurseurs d'arômes selon l'invention sont exempts de substances toxiques ou indésirables qui se trouvent parfois dans les hydrolysats acides des protéines et des lipides, et surtout après pyrolyse des matières premières protéiques. En effet, les compositions selon l'invention sont pauvres en lipides.

Par ailleurs, les compositions selon l'invention sont obtenues à l'issue d'un procédé de fermentation de type alimentaire utilisant un traitement thermique plus doux que les procédés thermiques et chimiques employés pour préparer les extraits de levure et les hydrolysats de protéines. Par conséquent, les compositions selon l'invention possèdent à priori un potentiel aromatique mieux préservé.

Grâce à leur potentiel organoleptique, les compositions selon l'invention trouvent un champ d'application particulièrement intéressant comme matière première dans la fabrication d'arômes.

Pour révéler les notes aromatiques, potentiellement présentes dans les compositions selon l'invention, on procède généralement de la façon suivante :
1) on ajoute dans les compositions selon l'invention, qui sont à l'état liquide, pâteux, solide ou pulvérulent, un ou plusieurs ingrédients de qualité alimentaire, par exemple des glucides, des acides aminés, du chlorure de sodium, des ribo-nucléotides, des acides gras et divers autres ingrédients tels que des aromates, etc ... Pour développer des arômes salés et/ou grillés agréables, il n'est pas nécessaire, avec les compositions selon l'invention, d'ajouter un nombre important ni une quantité importante d'autres précurseurs d'arômes ;
2) le mélange obtenu est soumis à un traitement thermique donnant lieu notamment à des réactions de Maillard. Ce traitement thermique peut être effectué entre 20° et 180° C pendant une durée de quelques secondes à plusieurs jours. Généralement, ce traitement thermique est effectué entre 100° et 140°C pendant une durée de 1 minute à 8 heures. On obtient des notes aromatiques variées, salées et/ou grillées et/ou torréfiées.

On notera que les notes aromatiques obtenues grâce aux compositions selon l'invention sont en outre avantageusement intenses.

La présente invention va maintenant être décrite relativement à un mode de réalisation du procédé de préparation des compositions selon l'invention et des exemples d'applications de ces compositions donnés simplement à titre d'illustration.

### Exemple 1

Le moût fermentaire utilisé pour la préparation des précurseurs d'arômes est obtenu par action d'un micro-organisme approprié pour la production d'acide glutamique, par exemple CORYNEBACTERIUM MELASSECOLA ATCC 17965, sur un substrat agricole contenant du sucre, par exemple des mélasses de betteraves. Un tel procédé de production d'acide glutamique est bien connu. On pourra, par exemple, utiliser le procédé décrit dans le brevet français n° 2.574.790.

Si on se reporte au procédé décrit dans ce brevet, en résumé, le moût riche en acide glutamique est obtenu par les étapes suivantes :
- une étape d'ultrafiltration du moût fermenté comprenant l'acide glutamique, donnant ainsi un perméat et un rétentat contenant les corps bactériens et autres insolubles dont des produits à l'état colloïdal,
- suivie d'une étape de concentration par évaporation.

Ainsi, pour 9.000 litres de moût, on obtient :
a) 7.500 litres de perméat contenant 850 kg d'acide glutamique et 20 kg de calcium à l'état dissout ;
b) 1.500 litres de rétentat contenant les corps bactériens et autres insolubles dont les produits à l'état colloïdal, 150 kg d'acide glutamique et 4 kg de calcium.

Le procédé de fabrication de la composition selon l'invention se déroule maintenant de la manière suivante : on concentre le perméat par évaporation, en obtenant ainsi un jus concentré d'acide glutamique ainsi que des condensats ; à cette étape d'évaporation, on élimine 4.600 kg d'eau pour obtenir 3.700 kg de jus concentré ne contenant aucune particule insoluble, contenant en majorité l'acide glutamique.

On obtient une pâte visqueuse et brune qui constitue le précurseur d'arômes n° 1 décrit ci-après.

Les eaux mères issues de la purification et la cristallisation de l'acide glutamique, une fois concentrées, peuvent également servir de précurseurs d'arômes.

| | Exemple n° 1 (a) |
|---|---|
| Matières sèches (% en poids) | 60 |
| Acide glutamique (% en poids) | 28,2 |
| Acides aminés libres totaux (% en poids) | 31,3 |
| Sucres totaux (tels que le glucose, etc) (% en poids) | environ 3,2 |
| Acides carboxyliques volatils totaux (% en poids) | environ 0,2 |
| Acides carboxyliques non volatils totaux (% en poids) | environ 0,75 |
| Acides aminés soufrés (% en poids) | environ 0,04 |
| (hydroxy)proline (% en poids) | environ 0,21 |
| Lysine (% en poids) | environ 0,01 |
| Valine (% en poids) | environ 0,02 |
| Acide pyrrolydone carboxylique (% en poids) | environ 0,1 |

| | |
|---|---|
| (a) la composition (1) est pratiquement exempte d'ammoniaque libre (en proportion inférieure à 1 ppm). A noter que la même composition, mais dans laquelle l'ammoniaque est conservée, a également abouti à des précurseurs d'arômes très attractifs sur le plan organoleptique. | |

On remarque que la composition obtenue comporte une faible teneur en acides aminés et en particulier en acides aminés soufrés, à la différence des compositions de l'art antérieur issues de voies biochimiques ou chimiques telles que les extraits de levure qui en comportent des teneurs nettement supérieures. En outre, la composition obtenue, et avec elle les compositions selon l'invention, est plus aisée à formuler car elle est de composition régulière. La composition 1 est génératrice d'arômes salés et, en particulier, conduit à des arômes de type viande très agréables.

### Exemple 2

On prépare, selon le procédé décrit dans le brevet français n° 2.574.790, un moût de fermentation glutamique. De ce moût fermentaire, on élimine les bactéries par ultrafiltration et par des techniques bien connues de fractionnement par concentration et cristallisation, une grande partie de l'acide glutamique produit et une grande partie des sels minéraux. On obtient une phase pâteuse riche en composés organiques qui constitue le précurseur d'arôme n° 2.

| | Exemple n° 2 (a) |
|---|---|
| Matières sèches (% en poids) | 76,5 |
| Acide glutamique (% en poids) | 7,5 |
| Acides aminés libres totaux (% en poids) | 14,8 |
| Sucres totaux (tels que le glucose, etc) (% en poids) | environ 8,2 |
| Acides carboxyliques volatils totaux (% en poids) | environ 0,36 |
| Acides carboxyliques non volatils totaux (% en poids) | environ 2,8 |
| Acides aminés soufrés (% en poids) | environ 0,02 |
| (hydroxy)proline (% en poids) | environ 0,19 |
| Lysine (% en poids) | environ 0,03 |
| Valine (% en poids) | environ 0,23 |
| Acide pyrrolydone carboxylique (% en poids) | environ 0,73 |

| | |
|---|---|
| (a) la composition (2) est pratiquement exempte d'ammoniaque libre (en proportion inférieure à 1 ppm). A noter que la même composition, mais dans laquelle l'ammoniaque est conservée, a également abouti à des précurseurs d'arômes très attractifs sur le plan organoleptique. | |

La composition 2 est génératrice d'arômes salés et, en particulier, conduit à des arômes de type viande très agréables.

### Exemples 3 et 4 : Préparation de bases pour bouillon.

A partir des ingrédients indiqués dans le tableau qui suit, on prépare deux bases pour bouillon.

| **Ingrédients** | **Quantité (g)** | |
|---|---|---|
| | **Exemple 3** | **Exemple 4** |
| Extrait de viande | 2,7 | 2,7 |
| Hydrolysat de protéine végétale | 3,0 | 0 |
| Extrait de levure | 3,8 | 0 |
| Composition décrite dans l'exemple 2 | 0 | 6,8 |
| Huile de palme | 22,5 | 22,5 |
| Glutamate de sodium | 21,10 | 21,10 |
| Sel fin | 46,20 | 46,20 |
| Ribotide | 0,1 | 0,1 |
| Oignon en poudre | 0,6 | 0,6 |

Les bases pour bouillon sont préparées à partir de la recette suivante :
Peser l'extrait de viande, l'huile de palme et, selon le cas, l'hydrolysat de protéine végétale et l'extrait de levure ou les compositions de l'exemple 2. Faire chauffer l'ensemble au bain-marie. Mélanger à part les poudres de glutamate de sodium, de sel fin, de Ribotide et d'oignons en poudre. Incorporer petit à petit, en mélangeant. Laisser refroidir à température ambiante la base pour bouillon obtenue.

La dégustation est faite en diluant à raison de 25 g par litre d'eau tiède chaque base pour bouillon.

On obtient, dans les exemples 3 et 4, les arômes de type bouillon cube recherchées. Quand on les compare, on constate que la recette de l'exemple 4 conduit, en outre, à des notes aromatiques plus intenses, ayant plus de rondeur et ne présentant aucune agressivité, notamment de type acide. Selon les aromaticiens, la recette de l'exemple 4 conduit à un arôme bien équilibré en notes aromatiques où toute dissonance est absente.

En outre, on parvient à reproduire l'arôme de type bouillon cube de façon tout à fait satisfaisante, en remplaçant, dans la recette précitée, l'extrait de viande par la composition préparée dans l'exemple 2, de sorte que cette composition représente 9,5 g pour 100 g de bouillon cube.

### Exemple 5

A l'issue d'une fermentation classique visant la production de lysine, après pasteurisation, élimination des corps bactériens et séparation de la lysine produite et des sels minéraux, on recueille une solution concentrée en composés organiques dont les caractéristiques sont les suivantes (les résultats sont exprimés en g pour 100 g de la solution concentrée) :

| | |
|---|---|
| - Matières sèches | 75,0 |
| - Acide glutamique libre | environ 0,3 |
| - Acides aminés libres totaux | environ 3 |
| - Méthionine | environ 0,02 |
| - Lysine | environ 0,3 |

Cette solution concentrée est traitée à la chaux. On obtient un produit à l'état pâteux à teneur en matières sèches égale à environ 77 % pondéral. Cette pâte est diluée de sorte à obtenir une teneur en matières sèches égale à 50 % pondéral, puis séchée par atomisation. Les conditions opératoires de l'atomisation sont les suivantes :

| | |
|---|---|
| - débit d'entrée | environ 1,5 litre par heure |
| - température d'entrée | 130°C - 140° C |
| - température de sortie | 70° C |

Le produit obtenu se présente sous la forme d'une poudre de couleur marron avec un arôme grillé très prononcé de chocolat avec des nuances café.

## Revendications (Revendications pour l'(les) Etat(s) contractant(s) suivant(s): AT, BE, CH, DE, DK, FR, GB, IT, LI, LU, NL, SE)

1. Précurseurs d'arômes utiles comme matières premières pour la fabrication d'arômes salés et/ou grillés et/ou torréfiés, notamment par des réactions de Maillard, caractérisés en ce que lesdits précurseurs d'arômes consistent en un moût fermenté et traité, obtenu à partir d'un ou de plusieurs micro-organismes producteurs d'acides aminés, résultant de la fermentation de sources de carbone d'origine végétale, le moût fermenté obtenu étant ensuite traité pour en éliminer les micro-organismes et les produits indésirables en alimentation humaine et animale.

2. Précurseurs d'arômes selon la revendication 1, caractérisés en ce qu'ils sont constitués d'un moût de fermentation dont on a éliminé, en outre, un ou plusieurs composés minéraux et/ou organiques par des opérations de fractionnement plus ou moins poussées par divers procédés physiques et/ou chimiques.

3. Précurseurs d'arômes selon la revendication 2, caractérisés en ce que, du moût de la fermentation, on élimine, en outre, les sels minéraux extractibles.

4. Précurseurs d'arômes selon l'une des revendications 1 à 3 caractérisés en ce qu'ils consistent en un moût de fermentation traité et concentré.

5. Précurseurs d'arômes selon la revendication 4, caractérisés en ce qu'ils consistent en un moût de fermentation traité et séché pour les rendre pulvérulents.

6. Précurseurs d'arômes selon l'une des revendications 1 à 5, caractérisés en ce que les sources de carbone choisies sont l'amidon et ses hydrolysats, des sucres tels que le glucose, le saccharose ou des mélasses.

7. Précurseurs d'arômes selon l'une des revendications 1 à 6, caractérisés en ce qu'ils sont obtenus à partir d'un moût de fermentation traité et décoloré, par exemple à l'aide de charbon actif ou par chromatographie sur résine.

8. Précurseurs d'arômes selon l'une des revendications 1 à 7, caractérisés en ce que lesdits précurseurs d'arômes sont obtenus à partir d'un moût de fermentation obtenu à partir d'un ou de plusieurs micro-organismes producteurs d'acide glutamique ou de ses sels.

9. Précurseurs d'arômes selon la revendication 8, caractérisés en ce qu'ils sont constitués d'un moût de fermentation, obtenu à partir d'un ou de plusieurs micro-organismes producteurs d'acide glutamique ou de ses sels, dont on a éliminé, en outre, les sels minéraux extractibles ainsi que, au moins partiellement, l'acide glutamique ou ses sels.

10. Arômes salés et/ou grillés et/ou torréfiés préparés à partir des précurseurs d'arômes définis dans l'une des revendications 1 à 9.

## Revendications (Revendications pour l'(les) Etat(s) contractant(s) suivant(s): ES)

1. Procédé pour l'obtention de précurseurs d'arômes utiles comme matières premières pour la fabrication d'arômes salés et/ou grillés et/ou torréfiés, notamment par des réactions de Maillard, caractérisé en ce que ledit procédé comporte les étapes suivantes :
(a) fermentation de sources de carbones d'origine végétale avec un ou plusieurs micro-organismes producteurs d'acides aminés,
(b) un ou plusieurs traitements du moût fermenté obtenu pour en éliminer les micro-organismes et les produits indésirables en alimentation humaine et animale, conduisant à un moût fermenté et traité qui constitue le précurseur d'arômes recherché.

2. Procédé selon la revendication 1, caractérisé en ce que, au cours de l'étape (b), on élimine aussi du moût fermenté un ou plusieurs composés minéraux et/ou organiques par des opérations de fractionnement plus ou moins poussées par divers procédés physiques et/ou chimiques.

3. Procédé selon la revendication 2, caractérisé en ce que, au cours de l'étape (b), on élimine les sels minéraux extractibles du moût de fermentation.

4. Procédé selon l'une des revendications 1 à 3, caractérisé en ce que l'on concentre le moût de fermentation traité.

5. Procédé selon la revendication 4, caractérisé en ce que l'on sèche le moût de fermentation traité afin de le rendre pulvérulent.

6. Procédé selon l'une des revendications 1 à 5, caractérisé en ce que les sources de carbone choisies pour réaliser l'étape (a) sont l'amidon et ses hydrolysats, des sucres tels que le glucose, le saccharose ou des mélasses.

7. Procédé selon l'une des revendications 1 à 6, caractérisé en ce que l'on soumet, en outre, le moût de fermentation à un traitement de décoloration, par exemple à l'aide de charbon actif ou par chromatographie sur résine.

8. Procédé selon l'une des revendications 1 à 7, caractérisé en ce que l'on utilise un ou plusieurs micro-organismes producteurs d'acide glutamique ou de ses sels pour réaliser l'étape (a).

9. Procédé selon la revendication 8, caractérisé en ce que, au cours de l'étape (b), on élimine, en outre, les sels minéraux extractibles et, au moins partiellement, l'acide glutamique ou ses sels.

10. Application des moûts fermentés et traités, préparés selon le procédé décrit dans l'une des revendications 1 à 9, en tant que matières premières pour la fabrication d'arômes salés et/ou grillés et/ou torréfiés.

## Claims (Claims for the following Contracting State(s): AT, BE, CH, DE, DK, FR, GB, IT, LI, LU, NL, SE)

1. Flavour precursors useful as raw materials for the manufacture of salted and/or grilled and/or roasted flavours, particularly by Maillard reactions, characterized in that the said flavour precursors consist in a fermented and processed must, obtained from one or more micro-organisms producers of amino acids, resulting from the fermentation of sources of carbon of vegetable origin, the fermented must being subsequently treated to eliminate therefrom the micro-organisms and the undesirable products for human food and animal feeding.

2. Flavour precursors according to claim 1, characterized in that they consist in a fermentation must from which, in addition, one or more mineral and/or organic compounds have been eliminated by more or less intensive fractionating operations using various physical and/or chemical processes.

3. Flavour precursors according to claim 2, characterized in that the extractable mineral salts are also eliminated from the fermentation must,

4. Flavour precursors according to one of claims 1 to 3, characterized in that they consist in a fermentation must which is processed and concentrated.

5. Flavour precursors according to claim 4, characterized in that they consist in a fermentation must processed and dried to make them pulverulent.

6. Flavour precursors according to one of claims 1 to 5, characterized in that the sources of carbon chosen are starch and its hydrolysates, sugars such as glucose, saccharose or molasses.

7. Flavour precursors according to one of claims 1 to 6, characterized in that they are obtained from a fermentation must treated and bleached, for example with the aid of active carbon or by resin chromatography.

8. Flavour precursors according to one of claims 1 to 7, characterized in that the said flavour precursors are obtained from a fermentation must produced from one or more micro-organisms producing glutamic acid or its salts.

9. Flavour precursors according to claim 8, characterized in that they are formed by a fermentation must, obtained from one or more micro-organisms producing glutamic acid or its salts, from which the elimination has been effected, furthermore, of the extractable mineral salts as well as, at least partly, glutamic acid or its salts.

10. Salted and/or grilled and/or roasted flavours prepared from the flavour precursors defined in one of claims 1 to 9.

## Claims (Claims for the following Contracting State(s): ES)

1. Process for the obtention of flavour precursors useful as raw materials for the manufacture of salted and/or grilled and/or roasted flavours, particularly by Maillard reactions, characterized in that said process consists in the following stages :
a) fermentation of sources of carbon of vegetable origin with one or more micro-organisms producers of amino acids ;
b) one or several treatment phases of the fermented must obtained in order to eliminate therefrom the micro-organisms and the undesirable products for human food and animal feeding, leading to a fermented and treated must which constitutes the required flavour precursor.

2. Process according to claim 1, characterized in that, during stage (b), one or more mineral and/or organic compounds have been eliminated from the fermented must by more or less intensive fractionating operations using various physical and/or chemical processes.

3. Process according to claim 2, characterized in that, during stage (b), the extractable mineral salts are also eliminated from the fermentation must.

4. Process according to any of claims 1 to 3, characterized in that the treated fermentation must is concentrated.

5. Process according to claim 4, characterized in that the treated fermentation must is dried to make it pulverulent.

6. Process according to any of claims 1 to 5, characterized in that the sources of carbon chosen to carry out stage (a) are starch and its hydrolysates, sugars such as glucose, saccharose or molasses.

7. Process according to any of claims 1 to 6, characterized in that, in addition, the fermentation must is bleached, for example with the aid of active carbon or by resin chromatography.

8. Process according to any of claims 1 to 7, characterized in that one or more micro-organisms producing glutamic acid or its salts are used to carry out stage (a).

9. Process according to claim 8, characterized in that, during stage (b), the extractable mineral salts as well as, at least partly, the glutamic acid or its salts, are eliminated.

10. Application of fermented and treated musts, prepared according to the process described in any of claims 1 to 9, as raw materials for the manufacture of salted and/or grilled and/or roasted flavours.

## Patentansprüche (Patentansprüche für folgende(n) Vertragsstaat(en): AT, BE, CH, DE, DK, FR, GB, IT, LI, LU, NL, SE)

1. Vorstufen von als Ausgangsstoffe für die Herstellung von Salz- und/oder Brat- und/oder Röstaromen verwendbaren Aromen, insbesondere durch Maillard-Reaktionen, dadurch gekennzeichnet, daß diese Vorstufen von Aromen aus einer fermentierten und behandelten Würze bestehen, die ausgehend von einem oder mehreren Mikroorganismen, die Aminosäuren über die Vorstoffwechslung von pflanzlichen Kohlenstoffquellen produzieren, erhalten ist, wobei die erhaltene fermentierte Würze anschließend behandelt wird, um die Mikroorganismen und die bei der menschlichen und Tierernährung unerwünschten Produkte zu entfernen.

2. Vorstufen von Aromen nach Anspruch 1, dadurch gekennzeichnet, daß sie aus einer fermentierten Würze bestehen, aus der man daneben mit durch verschiedene physikalische und/oder chemische Verfahren unterstützten Fraktionierverfahren eine oder mehrere anorganische und/oder organische Verbindungen entfernt hat.

3. Vorstufen von Aromen nach Anspruch 2, dadurch gekennzeichnet, daß man aus der fermentierten Würze daneben die extrahierbaren Mineralsalze entfernt.

4. Vorstufen von Aromen nach einem der Ansprüche 1 bis 3, dadurch gekennzeichnet, daß sie aus einer behandelten und konzentrierten fermentierten Würze bestehen.

5. Vorstufen von Aromen nach Anspruch 4, dadurch gekennzeichnet, daß sie aus einer behandelten fermentierten Würze bestehen, die, um sie in den pulverförmigen Zustand zu überführen, getrocknet ist.

6. Vorstufen von Aromen nach einem der Ansprüche 1 bis 5, dadurch gekennzeichnet, daß die Kohlenstoffquellen ausgewählt werden unter Stärke und ihren Hydrolysaten, Zuckern, wie Glucose, Saccharose oder Melasse.

7. Vorstufen von Aromen nach einem der Ansprüche 1 bis 6, dadurch gekennzeichnet, daß sie ausgehend von einer behandelten fermentierten und beispielsweise mit Hilfe von Aktivkohle oder Chromatographie an Harzen entfärbten Würze hergestellt werden.

8. Vorstufen von Aromen nach einem der Ansprüche 1 bis 7, dadurch gekennzeichnet, daß diese ausgehend von einer fermentierten Würze erhalten sind, die ausgehend von einem oder mehreren Glutaminsäure oder ihre Salze produzierenden Mikroorganismen erhalten ist.

9. Vorstufen von Aromen nach Anspruch 8, dadurch gekennzeichnet, daß sie aus einer fermentierten Würze bestehen, die ausgehend von einem oder mehreren Glutaminsäure oder ihre Salze produzierenden Mikroorganismen erhalten ist, aus der man daneben die extrahierbaren Mineralsalze ebenso wie mindestens teilweise die Glutaminsäure oder ihre Salze entfernt hat.

10. Salz- und/oder Brat- und/oder Röstaromen, die ausgehend von den in einem der Ansprüche 1 bis 9 definierten Vorstufen von Aromen hergestellt sind.

## Patentansprüche (Patentansprüche für folgende(n) Vertragsstaat(en): ES)

1. Verfahren für die Erhaltung Vorstufen von als Ausgangsstoffe für die Herstellung von Salz- und/oder Brat- und/oder Röstaromen verwendbaren Aromen, insbesondere durch Maillard-Reaktionen, dadurch gekennzeichnet, daß dieses Verfahren aus den folgenden Schritten besteht :
a) Fermentierung von pflanzlichen Kohlenstoffquellen mit einem oder mehreren Mikroorganismen, die Aminosäuren produzieren ;
b) eine oder mehrere Behandlungen der erhaltenen fermentierten Würze, um die Mikroorganismen und die bei der menschlichen und Tierernährung unerwünschten Produkte zu entfernen, zur Erhaltung einer behandelten und fermentierten Würze, die die gesuchte Vorstufe von Aromen bildet.

2. Verfahren nach Anspruch 1, dadurch gekennzeichnet, daß während Schritt (b), auch eine oder mehrere anorganische und/oder organische Verbindungen, mit durch verschiedene physikalische und/oder chemische Verfahren unterstützten Fraktionverfahren, aus der fermentierten Würze entfernt werden.

3. Verfahren nach Anspruch 2, dadurch gekennzeichnet, daß daneben, während Schritt (b), die extrahierbaren Mineralsalze aus der fermentierten Würze entfernt werden.

4. Verfahren nach einem der Ansprüche 1 bis 3, dadurch gekennzeichnet, daß die behandlete fermentierte Würze konzentriert wird.

5. Verfahren nach Anspruch 4, dadurch gekennzeichnet, daß die behandlete fermentierte Würze getrocknet wird, um sie in den pulverförmigen Zustand zu überführen.

6. Verfahren nach einem der Ansprüche 1 bis 5, dadurch gekennzeichnet, daß die zur Durchführung Schrittes (a) ausgewählten Kohlenstoffquellen, Stärke und ihre Hydrolysate, Zucker, wie Glucose, Saccharose oder Melasse sind.

7. Verfahren nach einem der Ansprüche 1 bis 6, dadurch gekennzeichnet, daß die fermentierte Würze auch noch entfärbt wird, zum Beispiel mit Hilfe von Aktivkohle oder Chromatographie an Harzen.

8. Verfahren nach einem der Ansprüche 1 bis 7, dadurch gekennzeichnet, daß eine oder mehrere Glutaminsäure oder ihre Salze produzierende Mikroorganismen zur Durchführung Schrittes (a) verwendet werden.

9. Verfahren nach Anspruch 8, dadurch gekennzeichnet, daß während Schritt (b) auch die extrahierbaren Mineralsalze ebenso wie mindestens teilweise die Glutaminsäure oder ihre Salze werden.

10. Anwendung des nach einem der Ansprüche 1 bis 9 vorbereiten Verfahrens als Ausgangsstoffe für die Herstellung von Salz- und/oder Brat- und/oder Röstaromen.
